# EUROPÄISCHE PATENTSCHRIFT

(11) **EP 3 956 579 B1**
(45) Veröffentlichungstag und Bekanntmachung des Hinweises auf die Patenterteilung: **10.01.2024**
(21) Anmeldenummer: 20718566.1
(22) Anmeldetag: 26.03.2020
(51) Int. Cl.: F16D 1/076, F16H 55/36, F16D 25/08

(54) **POSITIONSERFASSUNGSEINHEIT, KUPPLUNGSSTELLER MIT POSITIONSERFASSUNGSEINHEIT UND FAHRZEUGKUPPLUNG MIT POSITIONSERFASSUNGSEINHEIT**
POSITION DETECTION UNIT, CLUTCH ACTUATOR WITH A POSITION DETECTION UNIT, AND VEHICLE CLUTCH WITH A POSITION DETECTION UNIT
UNITÉ DE DÉTECTION DE POSITION, ACTIONNEUR D'EMBRAYAGE COMPRENANT UNE UNITÉ DE DÉTECTION DE POSITION ET EMBRAYAGE DE VÉHICULE COMPRENANT UNE UNITÉ DE DÉTECTION DE POSITION

(30) Priorität: 16.04.2019 DE 102019109972
(43) Veröffentlichungstag der Anmeldung: 23.02.2022
(73) Patentinhaber: KNORR-BREMSE Systeme für Nutzfahrzeuge GmbH, 80809 München (DE)
(72) Erfinder: HUBER, Christian, 80937 München (DE); ALBRECHT, Matthias, 82515 Wolfratshausen (DE)
(86) Internationale Anmeldenummer: PCT/EP2020/058518
(87) Internationale Veröffentlichungsnummer: WO 2020/212110

(56) Entgegenhaltungen:
- DE-A1-102017 111 086
- DE-A1-102017 112 607

## Beschreibung

Die Erfindung betrifft eine Positionserfassungseinheit, insbesondere eine Positionserfassungseinheit zum Erfassen einer Position eines Stellelements eines Kupplungsstellers einer Fahrzeugkupplung, die eine genaue Positionserfassung ermöglicht.

Es sind Positionserfassungseinheiten bekannt, die mit Hilfe eines magnetischen Geberelements und eines Sensors, der ein Magnetfeld erfasst, Positionen von Stellelementen erfassen. Jedoch werden die Anforderungen an die Genauigkeit der Positionserfassung immer höher, selbst wenn die Erfassung unter schwierigen Bedingungen, nämlich in einer Umgebung mit verschiedenartigen Verschmutzungen, erfolgen muss.

Bei Nutzfahrzeugen nimmt beispielsweise eine Getriebeautomatisierung eine immer wichtiger werdende Rolle ein, da diese erhebliche Vorteile beim Kraftstoffverbrauch und bei einer Verschleißminimierung gegenüber Handschaltgetrieben hat. Ein Bestandteil der Getriebeautomatisierung ist u.a. ein Kupplungssteller mit einer erforderlichen Positionserfassung. In vielen Anwendungsfällen erfasst ein verwendeter Positionssensor durch eine Aluminiumwand des Kupplungsstellers hindurch die Position eines Arbeitskolbens, der durch seine lineare Bewegung die Kupplung betätigt, also einkuppelt oder auskuppelt. Dazu wird als ein Geberelement, ein sogenanntes Target, ein mit dem Arbeitskolben verbundener Permanentmagnet verwendet. Zur Sensierung des Magneten werden beispielsweise magnetische Sensorelemente, wie z.B. Hall-Chips oder magnetoinduktive Sensoren, z.B. basierend auf dem PLCD-Prinzip, verwendet, um eine möglichst große Genauigkeit zu erzielen.

Durch die Magnetkraft des Geberelements werden jedoch ferritische Späne, die beispielsweise durch einen Abrieb der Schwungscheibe entstehen, angezogen. Die ferritischen Späne haften dann vermischt mit organischen Stoffen, beispielsweise aus einem Abrieb der Kupplungsscheibe und Schmierstoffen, wie Öl oder Fett, als Verschmutzungen an der Aluminiumwand des Kupplungsstellers an.

Die anhaftenden ferritischen Partikel verändern jedoch das zu sensierende Magnetfeld des Geberelements, so dass der Sensor eine Wegeposition des Arbeitskolbens nicht mehr korrekt erfassen kann.

Aufgrund einer sicherheitsrelevanten Funktion eines Zentralausrückers muss eine Kupplungsposition, insbesondere ein Schleifpunkt, sehr genau erfasst werden. Aus diesem Grund dürfen die Verschmutzungen keine Auswirkung auf ein Wegesignal haben.

Um solche Verschmutzungen zu verhindern, offenbaren die Dokumente DE 10 2017 111086 A1 und DE 2017 112607 A1 eine Positionserfassungseinheit gemäß dem Oberbegriff des Anspruchs 1.

Die der Erfindung zugrunde liegende Aufgabe liegt darin, die obigen Probleme zu lösen und eine Positionserfassungseinheit bereitzustellen, die eine genaue Erfassung einer Position eines Stellglieds mittels eines Magneten auch unter Umgebungsbedingungen mit einer ferritischen Verschmutzung sicherstellt.

Die Aufgabe wird durch eine Positionserfassungseinheit gemäß Anspruch 1, einen Kupplungssteller gemäß Anspruch 9 und eine Fahrzeugkupplung gemäß Anspruch 12 gelöst. Vorteilhafte Weiterentwicklungen sind in den abhängigen Ansprüchen enthalten.

Gemäß einem Aspekt der Erfindung weist eine Positionserfassungseinheit zum Erfassen einer Position eines innerhalb eines Gehäuses eines Kupplungsstellers einer Fahrzeugkupplung angeordneten Stellelements ein magnetisches Geberelement, das innerhalb des Gehäuses des Kupplungsstellers am Stellelement vorgesehen ist, einen Sensor, der außerhalb des Gehäuses (10) des Kupplungsstellers (2) vorgesehen und so ausgebildet und angeordnet ist, dass er über einen Erfassungsraum verfügt, innerhalb dem der Sensor eine Position des magnetischen Geberelements innerhalb eines vorbestimmten Bewegungsausmaßes des Stellelements erfassen kann, und eine Schutzeinrichtung, die ausgebildet ist, ein Anlagern von durch das magnetische Geberelement angezogenen ferritischen Spänen zu verhindern, auf.

Der Erfassungsraum des Sensors ist als ein an den Sensor angrenzendes Volumen definiert, in dem der Sensor eine Änderung eines Magnetfelds erfasst. Der Erfassungsraum hat ein Ausmaß, innerhalb dem es dem Sensor möglich ist, die Position des Geberelements innerhalb des vorbestimmten Bewegungsausmaßes zu erfassen, so dass die Position des Geberelements über zumindest einen relevanten Teil eines Verfahrwegs des Stellelements erfasst werden kann. Der relevante Teil des Verfahrwegs ist der Teil, in dem eine Positionserfassung für eine sichere Funktion des Kupplungsstellers erforderlich ist.

Durch die Schutzeinrichtung wird ein Anlagern von den durch das magnetische Geberelement angezogenen ferritischen Spänen beispielsweise an dem Gehäuse des Kupplungsstellers oder eine Anwesenheit in dem Erfassungsraum verhindert. Verhindert bedeutet in diesem Zusammenhang, dass ferritische Späne nur in einem Ausmaß in dem Erfassungsraum enthalten sind, so dass sie auf eine genaue Erfassung der Position des Stellelements keinen Einfluss haben.

Die Schutzeinrichtung verhindert über drei unterschiedliche Grundprinzipien das Anlagern von den durch das magnetische Geberelement angezogenen ferritischen Spänen innerhalb des Erfassungsraums. Entweder liegt der Teil des Erfassungsraums außerhalb des Gehäuses des Kupplungsstellers vollständig innerhalb der Schutzeinrichtung, so dass die ferritischen Späne nicht in den Erfassungsraum gelangen können. Vollständig bedeutet hier, dass der Teil des Erfassungsraums außerhalb des Gehäuses des Kupplungsstellers zu so großen Teilen innerhalb der Schutzeinrichtung liegt, dass die ferritischen Späne keine funktionsrelevanten Auswirkungen auf das Signal des Sensors haben. Andererseits besteht die Möglichkeit, dass Abmessungen einer Schutzeinrichtung in Verbindung mit einem Material der Schutzeinrichtung mit einer vorbestimmten magnetischen Permeabilität ein Durchgehen von magnetischen Anziehungskräften des magnetischen Geberelements in einen Bereich außerhalb der Schutzeinrichtung verhindern, so dass die ferritischen Partikel in einem Bereich des Erfassungsraums nicht durch das magnetische Geberelement angezogen werden, um sich anzulagern. Auch hier bedeutet das Verhindern des Anlagerns, dass sich Späne lediglich in einem solchen Ausmaß anlagern, dass sie keine funktionsrelevanten Auswirkungen auf das Signal des Sensors haben. Als drittes Grundprinzip gibt es die Möglichkeit, dass die ferritischen Partikel in einem Bereich außerhalb des Erfassungsraums durch eine magnetische Kraft angezogen werden, so dass sie daran gehindert werden, in den Erfassungsraum zu gelangen, wobei auch hier die Späne in einem solchen Ausmaß in den Erfassungsraum gelangen können, dass sie keine funktionsrelevanten Auswirkungen auf das Signal des Sensors haben.

Gemäß einer vorteilhaften Weiterbildung weist die Schutzeinrichtung ein Gehäuse des Sensors auf, das an der Außenseite des Gehäuses des Kupplungsstellers vorgesehen ist und derart ausgebildet ist, dass es den außerhalb des Gehäuses des Kupplungsstellers liegenden Teil des Erfassungsraums abdeckt und somit aufgrund seiner Abmessungen das Anlagern der ferritischen Späne verhindert.

Die Abmessungen des Gehäuses des Sensors können einfach an eine Größe des Erfassungsraums des Sensors angepasst werden, so dass es ohne Probleme kostengünstig möglich ist, das Anlagern der ferritischen Späne innerhalb des Erfassungsraums zu verhindern.

In einer weiteren vorteilhaften Weiterbildung ist der Sensor mittels einer Befestigungseinrichtung befestigt, wobei die Befestigungseinrichtung als Schutzeinrichtung ausgebildet ist.

Bei einem Vorsehen der Befestigungseinrichtung, dessen Gehäuse das Anlagern der ferritischen Späne innerhalb des Erfassungsraums verhindert, ist es möglich, den Sensor mit einem Gehäuse mit einer beliebigen Gehäuseform vorzusehen. Der Sensor wird mittels der Befestigungseinrichtung beispielsweise an einem Gehäuse der Fahrzeugkupplung oder dem Gehäuse des Kupplungsstellers befestigt.

Gemäß einer weiteren vorteilhaften Weiterbildung ist die Schutzeinrichtung durch ihre Abmessungen in Verbindung mit einem Material mit einer vorbestimmten magnetischen Permeabilität so ausgebildet, dass sie innerhalb des Erfassungsraums ein Anhaften der ferritischen Späne an der Schutzeinrichtung verhindert, aber ein Erfassen einer Position des magnetischen Geberelements ermöglicht.

Die magnetische Permeabilität gibt eine Durchlässigkeit eines Materials für einen magnetischen Fluss an. Durch ein Abstimmen der Abmessungen der Schutzeinrichtung mit dem Material mit einer vorbestimmten magnetischen Permeabilität ist es möglich, zu verhindern, dass sich die ferritischen Späne innerhalb des Erfassungsraums an der Schutzeinrichtung anlagern. Andererseits ist die Abmessung der Schutzeinrichtung in Verbindung mit der vorbestimmten magnetischen Permeabilität so gewählt, dass das Erfassen der Position des magnetischen Geberelements möglich ist. Da sich keine ferritischen Späne an einer Außenfläche der Schutzeinrichtung anlagern können, ist es möglich, die Abmessungen der Schutzeinrichtung so zu verringern, dass sich deren Außenfläche auch innerhalb des Erfassungsraums befinden kann, wodurch Material und Gewicht eingespart werden kann.

Erfindungsgemäß ist die Schutzeinrichtung durch ihre Abmessungen in Verbindung mit einem Material mit einer vorbestimmten magnetischen Permeabilität ausgebildet, außerhalb des Erfassungsraums ein Anlagern der ferritischen Späne zu ermöglichen.

Durch das Anlagern der ferritischen Späne an der Schutzeinrichtung außerhalb des Erfassungsraums wird die Menge der freien Späne in der Nähe des magnetischen Sensors reduziert, so dass der Erfassungsraum einfacher von den ferritischen Spänen freigehalten werden kann. Das Anlagern an der Schutzeinrichtung außerhalb des Erfassungsraums bei einem gleichzeitigen Verhindern des Anlagerns innerhalb des Erfassungsraums wird beispielsweise durch eine Verwendung von unterschiedlichen Materialien innerhalb und außerhalb des Erfassungsraums ermöglicht.

In einer weiteren vorteilhaften Weiterbildung weist zumindest eines der Gehäuse eine Rippe auf, und die Rippe ist ausgebildet, in einem Bereich der Rippe ein Anlagern der ferritischen Späne zu ermöglichen.

In dieser Weiterbildung kann neben dem Effekt, dass die Menge der freien Späne reduziert ist, auch die Festigkeit des Gehäuses erhöht werden.

Erfindungsgemäß weist die Schutzeinrichtung einen Magneten auf, der außerhalb des Erfassungsraums angeordnet ist, und der Magnet ist ausgebildet, die ferritischen Späne anzuziehen, um das Anlagern der ferritischen Späne innerhalb des Erfassungsraums zu verhindern, insbesondere indem der Magnet (14) mit einer ausreichend starken Magnetkraft ausgestattet ist.

Auch durch diesen Magneten kann die Menge der freien Späne in der Nähe des magnetischen Sensors reduziert werden, so dass der Erfassungsraum einfacher von den ferritischen Spänen freigehalten werden kann. Dieser Magnet kann in einer günstigen Position angeordnet sein, so dass sich dort möglichst viele ferritische Späne anlagern, um so nicht in den Erfassungsraum einzudringen.

In einer vorteilhaften Weiterbildung ist der Sensor als ein Sensor nach magnetischem Messprinzip ausgebildet.

Mit Hilfe dieser Sensoren kann die Position des Stellelements mit relativ einfachen Mitteln genau ermittelt werden.

In einer anderen vorteilhaften Weiterbildung ist der Sensor als ein Hall-Sensor, insbesondere ein 2D-Hall-Sensor oder ein 3D-Hall-Sensor oder ein magnetoresistiver Sensor, insbesondere ein Giant-magnetoresistiver Sensor oder ein Tunnel-magnetoresistiver Sensor ausgebildet.

Durch diese Sensoren ist eine genaue bzw. hochgenaue Erfassung des Stellelements möglich.

Gemäß einem weiteren Aspekt der Erfindung weist der Kupplungssteller die Positionserfassungseinheit auf, wobei die Schutzeinrichtung das Gehäuse des Kupplungsstellers aufweist, das durch seine Abmessungen in Verbindung mit dem Material mit einer vorbestimmten magnetischen Permeabilität so ausgebildet ist, dass es innerhalb des Erfassungsraums ein Anlagern der ferritischen Späne an der Schutzeinrichtung verhindert, aber ein Erfassen der Position des magnetischen Geberelements ermöglicht.

Ebenfalls erfindungsgemäß weist die Schutzeinrichtung einen Magneten auf, der außerhalb des Erfassungsraums angeordnet ist, und der Magnet ist ausgebildet, die ferritischen Späne anzuziehen, um das Anlagern der ferritischen Späne innerhalb des Erfassungsraums zu verhindern, insbesondere indem der Magnet (14) mit einer ausreichend starken Magnetkraft ausgestattet ist.

Auch durch diesen Magneten kann die Menge der freien Späne in der Nähe des magnetischen Sensors reduziert werden, so dass der Erfassungsraum einfacher von den ferritischen Spänen freigehalten werden kann. Dieser Magnet kann in einer günstigen Position angeordnet sein, so dass sich dort möglichst viele ferritische Späne anlagern, um so nicht in den Erfassungsraum einzudringen.

In einer vorteilhaften Weiterbildung ist der Sensor als ein Sensor nach magnetischem Messprinzip ausgebildet.

Mit Hilfe dieser Sensoren kann die Position des Stellelements mit relativ einfachen Mitteln genau ermittelt werden.

In einer anderen vorteilhaften Weiterbildung ist der Sensor als ein Hall-Sensor, insbesondere ein 2D-Hall-Sensor oder ein 3D-Hall-Sensor oder ein magnetoresistiver Sensor, insbesondere ein Giant-magnetoresistiver Sensor oder ein Tunnel-magnetoresistiver Sensor ausgebildet.

Durch diese Sensoren ist eine genaue bzw. hochgenaue Erfassung des Stellelements möglich.

Gemäß einem weiteren Aspekt der Erfindung weist der Kupplungssteller die Positionserfassungseinheit auf, wobei die Schutzeinrichtung das Gehäuse des Kupplungsstellers aufweist, das durch seine Abmessungen in Verbindung mit dem Material mit einer vorbestimmten magnetischen Permeabilität so ausgebildet ist, dass es innerhalb des Erfassungsraums ein Anlagern der ferritischen Späne an der Schutzeinrichtung verhindert, aber ein Erfassen der Position des magnetischen Geberelements ermöglicht.

Durch das Vorsehen der Positionserfassungseinheit oder des Kupplungsstellers in der Fahrzeugkupplung ist es möglich, die Position des Stellglieds der Fahrzeugkupplung auch unter Umgebungsbedingungen mit einer ferritischen Verschmutzung genau zu erfassen.

Die Erfindung wird nun unter Bezugnahme auf die beigefügten Zeichnungen im Detail erläutert.

Insbesondere zeigt
- Fig. 1: eine schematische Darstellung einer Positionserfassungseinheit gemäß einer ersten Ausführungsform;
- Fig. 2: eine schematische Darstellung einer Positionserfassungseinheit gemäß einer zweiten Ausführungsform;
- Fig. 3: eine schematische Darstellung einer Positionserfassungseinheit gemäß einer dritten erfindungsgemäßen Ausführungsform;
- Fig. 4: eine schematische Darstellung einer Positionserfassungseinheit gemäß einer vierten Ausführungsform;
- Fig. 5: eine schematische Darstellung einer Positionserfassungseinheit gemäß einer fünften erfindungsgemäßen Ausführungsform; und
- Fig. 6: eine schematische Darstellung einer Positionserfassungseinheit gemäß einer sechsten Ausführungsform.

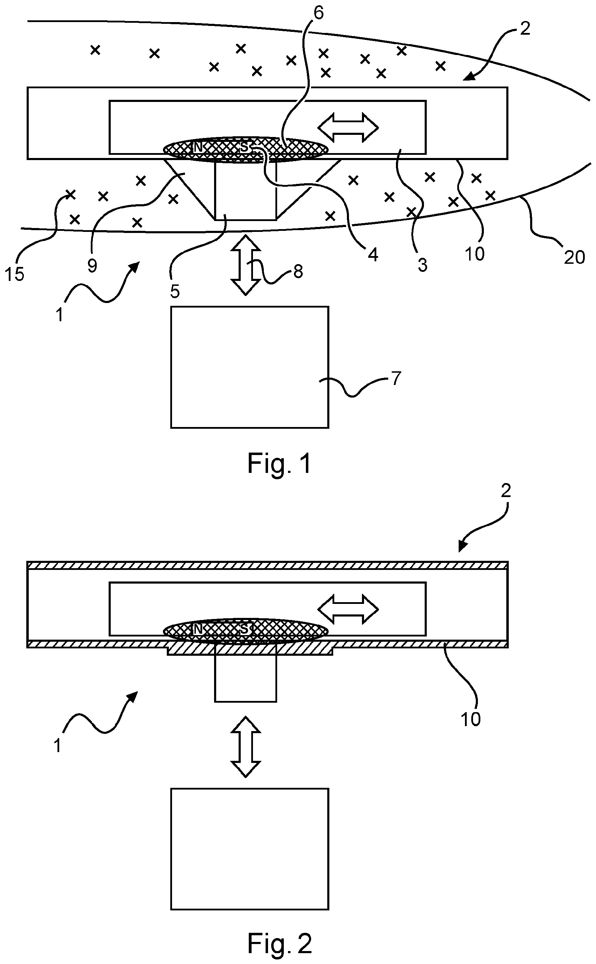

**Fig. 1** zeigt eine schematische Darstellung einer Positionserfassungseinheit 1 gemäß einer ersten erfindungsgemäßen Ausführungsform. Die Positionserfassungseinheit 1 ist in einer schematisch angedeuteten Fahrzeugkupplung 20, insbesondere an einem Kupplungssteller 2 der Fahrzeugkupplung 20, vorgesehen. Der Kupplungssteller 2 ist als Zentralausrücker ausgebildet, kann alternativ jedoch auch als ein an einer anderen Stelle angeordneter Kupplungssteller vorgesehen sein. Der Kupplungssteller 2 weist ein Stellelement 3 auf. Das Stellelement 3 dient zum Verstellen eines Ausrückzustands des Zentralausrückers 2. Der Kupplungssteller 2 ist als ein hydraulisch betriebener Ausrücker vorgesehen, so dass das Stellelement 3 als ein Kolben in einem Hydraulikzylinder vorgesehen ist. Alternativ sind auch andere Antriebsprinzipien denkbar, wobei das Stellelement 3 beispielsweise als eine Spindel eines elektrischen Linearantriebs ausgebildet ist.

Die Positionserfassungseinheit 1 weist ein magnetisches Geberelement 4 auf. Das magnetische Geberelement 4 ist mit dem Stellelement 3 verbunden bzw. an ihm befestigt, so dass das magnetische Geberelement 4 den Bewegungen des Stellelements 3 folgt und darüber die Bewegung des Stellelements 3 erfasst werden kann. Das Geberelement 4 ist innerhalb eines Gehäuses 10 des Kupplungsstellers 2 vorgesehen.

Ferner weist die Positionserfassungseinheit 1 einen Sensor 5 auf. Der Sensor 5 ist so ausgebildet und angeordnet, dass er eine Position des magnetischen Geberelements 4 innerhalb eines vorbestimmten Bewegungsausmaßes des Geberelements, also auch des Stellelements 3, erfasst. Der Sensor 5 ist als ein Hall-Sensor ausgebildet. In alternativen Ausführungsformen ist im Speziellen ein 2D-Hall-Sensor oder ein 3D-Hall-Sensor vorgesehen, oder es ist ein anderer Sensor nach magnetischem Messprinzip, beispielsweise ein magnetoresistiver Sensor, insbesondere ein Giant-magnetoresistiver Sensor oder ein Tunnel-magnetoresistiver Sensor vorgesehen.

Das vorbestimmte Bewegungsausmaß des Stellelements 3, und somit des magnetischen Geberelements 4, ist ein Hubweg des Kolbens, der erforderlich ist, die Kupplung zumindest von einem vollständig eingerückten Zustand in einen vollständig ausgerückten Zustand und umgekehrt zu überführen.

Der Sensor 5 ist so konfiguriert, dass er einen Erfassungsraum 6 sensieren kann. Genauer gesagt, ist der Erfassungsraum 6 des Sensors 5 ein an den Sensor 5 angrenzendes Volumen, in dem der Sensor 5 eine Änderung eines Magnetfelds erfasst. Der Erfassungsraum 6 hat Abmessungen, innerhalb der es dem Sensor 5 möglich ist, die Erfassung einer Position und einer Veränderung der Position des magnetischen Geberelements 4 innerhalb des vorbestimmten Bewegungsausmaßes über die Änderung des Magnetfelds durch eine Verlagerung des Magnetfelds des magnetischen Geberelements 4 zu ermöglichen. Somit kann die Position des Geberelements 4, und damit des Stellelements 3, entlang des Hubwegs des Kolbens erfasst werden.

Der Sensor 5 ist, wie durch einen Doppelpfeil 8 dargestellt, mit einer Getriebesteuerung 7 verbunden, so dass der Sensor 5 mit Spannung versorgt wird und Daten ausgetauscht werden können.

Darüber hinaus weist die Positionserfassungseinheit 1 eine Schutzeinrichtung auf, die ausgebildet ist, ein Anlagern von durch das magnetische Geberelement 4 angezogenen ferritischen Spänen 15 innerhalb des Erfassungsraums 6 zu verhindern. Das Anlagern von durch das magnetische Geberelement 4 angezogenen ferritischen Spänen 15 zu verhindern bedeutet in diesem Zusammenhang, dass ferritische Späne 15 nur in einem solchen Ausmaß in den Erfassungsraum 6 eintreten können, dass sie die genaue Erfassung der Position des Stellelements 3 nicht beeinträchtigen. Die ferritischen Späne 15 entstehen beispielsweise durch einen Abrieb eines Schwungrads der Fahrzeugkupplung 20 und können sich innerhalb eines Gehäuses der Fahrzeugkupplung 20 ausbreiten.

Die Schutzeinrichtung in dieser ersten Ausführungsform weist ein Gehäuse 9 des Sensors 5 auf, das durch seine Abmessungen ausgebildet ist, ein Anlagern der ferritischen Späne 15 innerhalb des Erfassungsraums 6 zu verhindern. Dies bedeutet, dass das Gehäuse 9 des Sensors 5 Abmessungen hat, wobei der Erfassungsraum 6 außerhalb des Gehäuses 10 des Kupplungsstellers 2 zu großen Teilen, bestenfalls vollständig, abgedeckt wird, sodass der Teil des Erfassungsraum 6 außerhalb des Gehäuses 10 des Kupplungsstellers 2 zu großen Teilen, bestenfalls vollständig, innerhalb der Schutzeinrichtung liegt, so dass das Anlagern der ferritischen Späne 15 verhindert wird, beziehungsweise die ferritischen Späne 15 keine funktionsrelevanten Auswirkungen auf das Signal des Sensors 5 haben.

**Fig. 2** zeigt eine schematische Darstellung der Positionserfassungseinheit 1 gemäß einer zweiten Ausführungsform. Die zweite Ausführungsform unterscheidet sich von der ersten Ausführungsform darin, dass nicht das Gehäuse 9 (Fig. 1) des Sensors 5 die Abmessungen hat, so dass das Gehäuse 9 den Erfassungsraum 6 außerhalb des Gehäuses 10 des Kupplungsstellers 2 vollständig abdeckt, sondern dass das Gehäuse 10 des Kupplungsstellers 2, innerhalb dessen das magnetische Geberelement 4 angeordnet ist, durch seine Abmessungen ausgebildet ist, das Anlagern der ferritischen Späne 15 innerhalb des Erfassungsraums 6 zu verhindern. Dazu ist der Erfassungsraum 6 vollständig innerhalb von einer Außenfläche des Gehäuses 10 des Kupplungsstellers 2 enthalten. Zu diesem Zweck weist das Gehäuse 10 des Kupplungsstellers 2 im Bereich des Erfassungsraums 6 des Sensors 5 eine größere Wandstärke als außerhalb des Erfassungsraums 6 des Sensors 5 auf. Zur besseren Darstellung dieser Eigenschaft ist das Gehäuse 10 des Kupplungsstellers 2 in Fig. 2 in einer Schnittdarstellung gezeigt. Alternativ ist es nicht zwingend erforderlich, dass die Wandstärke des Gehäuses 10 des Kupplungsstellers 2 im Bereich des Erfassungsraums größer ist, sofern der Erfassungsraum 6 innerhalb der Außenfläche des Gehäuses 10 liegt.

Ferner ist die Schutzeinrichtung optional durch ihre Abmessungen in Verbindung mit einem Material mit einer vorbestimmten magnetischen Permeabilität ausgebildet, ein Anhaften der ferritischen Späne 15 an Stellen außerhalb des Erfassungsraums 6 zu ermöglichen. Dies wird durch die vollständige Abdeckung des Erfassungsraums 6 möglich.

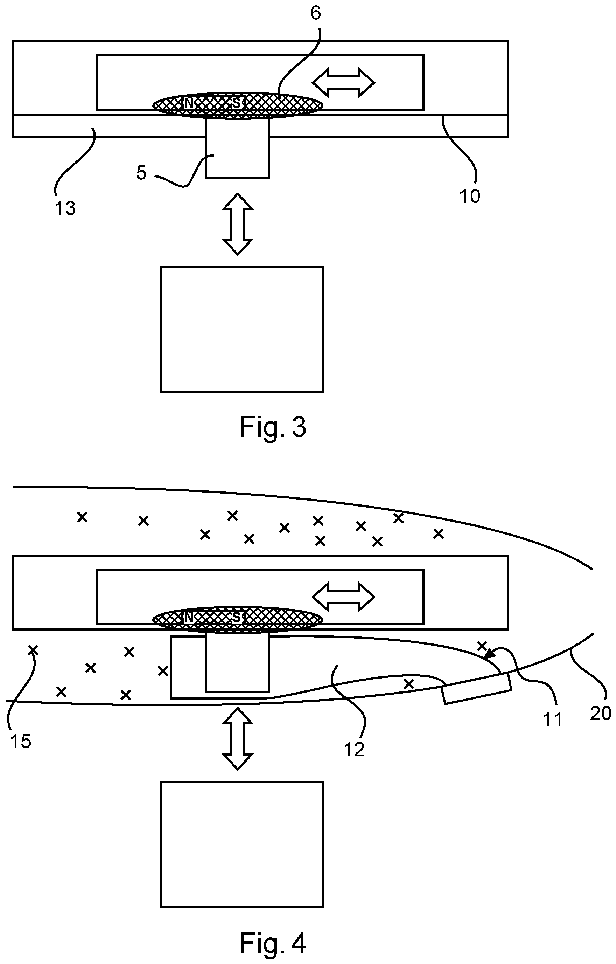

**Fig. 3** zeigt eine schematische Darstellung einer Positionserfassungseinheit gemäß einer dritten erfindungsgemäßen Ausführungsform. Die dritte Ausführungsform unterscheidet sich von der zweiten Ausführungsform darin, dass der Erfassungsraum 6 nicht vollständig innerhalb der Außenfläche des Gehäuses 10 des Kupplungsstellers 2 enthalten ist, sondern dass die Schutzeinrichtung durch ihre Abmessungen in Verbindung mit dem Material mit einer vorbestimmten magnetischen Permeabilität das Anhaften der ferritischen Späne 15 an der Schutzeinrichtung verhindert. Das Material des Gehäuses 10 des Kupplungsstellers 2 hat also eine vorbestimmte magnetische Permeabilität, die es in Verbindung mit der Wandstärke des Gehäuses 10 des Kupplungsstellers 2 verhindert, dass die ferritischen Späne 15 an dem Gehäuse anhaften. Daher ist es, wie in Fig. 3 zu sehen ist, nicht erforderlich, den gesamten Erfassungsraum 6 abzudecken. Dieses Prinzip der dritten Ausführungsform ist sowohl auf die zweite Ausführungsform als auch auf die obige erste und nachfolgend beschriebene vierte Ausführungsform anwendbar.

Darüber hinaus weist das Gehäuse 10 des Kupplungsstellers 2 eine Rippe 13 auf. Durch die Rippe 13 wird eine Vergrößerung der Festigkeit des Gehäuses 10 erzielt und außerdem können in einem Bereich der Rippe 13 ferritische Späne 15 anhaften. Die Rippe 13 ist hier benachbart zu dem Sensor 5 angeordnet. Das Anhaften der ferritischen Späne 15 wird durch ein Ausbilden der Rippe 13 aus einem Material mit einer geeigneten vorbestimmten magnetischen Permeabilität erreicht. In alternativen Ausführungsformen kann die Rippe 13 an einer anderen Stelle des Gehäuses 10 vorgesehen sein. Weiterhin alternativ sind mehrere Rippen 13, die Rippen an anderen Gehäusen, oder es ist keine Rippe 13 vorgesehen.

**Fig. 4** zeigt eine schematische Darstellung einer Positionserfassungseinheit gemäß einer vierten Ausführungsform. Die vierte Ausführungsform unterscheidet sich von den vorangehenden Ausführungsformen darin, dass der Sensor 5 eine Befestigungseinrichtung 11 mit einem Gehäuse 12 der Befestigungseinrichtung 11 aufweist, das ausgebildet ist, den Sensor 5 zumindest teilweise zu umschließen und an einem Gehäuse der Fahrzeugkupplung 20 zu befestigen. Die vierte Ausführungsform unterscheidet sich ferner darin, dass das Gehäuse 12 der Befestigungseinrichtung 11 aufgrund seiner Abmessungen ausgebildet ist, das Anlagern der ferritischen Späne 15 innerhalb des Erfassungsraums 6 zu verhindern. In alternativen Ausführungsformen wird der Sensor 5 durch das Gehäuse 12 nicht zumindest teilweise umschlossen und der Sensor 5 ist nicht an dem Gehäuse der Fahrzeugkupplung 20, sondern beispielsweise am Gehäuse 10 des Kupplungsstellers 2 befestigt.

Die Befestigungseinrichtung 11 ist eine Magnetventileinheit, die Magnetventile zum Ansteuern des Kupplungsstellers 2 aufweist. In einer alternativen Ausführungsform ist die Befestigungseinrichtung 11 nicht die Magnetventileinheit, sondern beispielsweise ein Halter, der lediglich zum Halten des Sensors 5 vorgesehen ist.

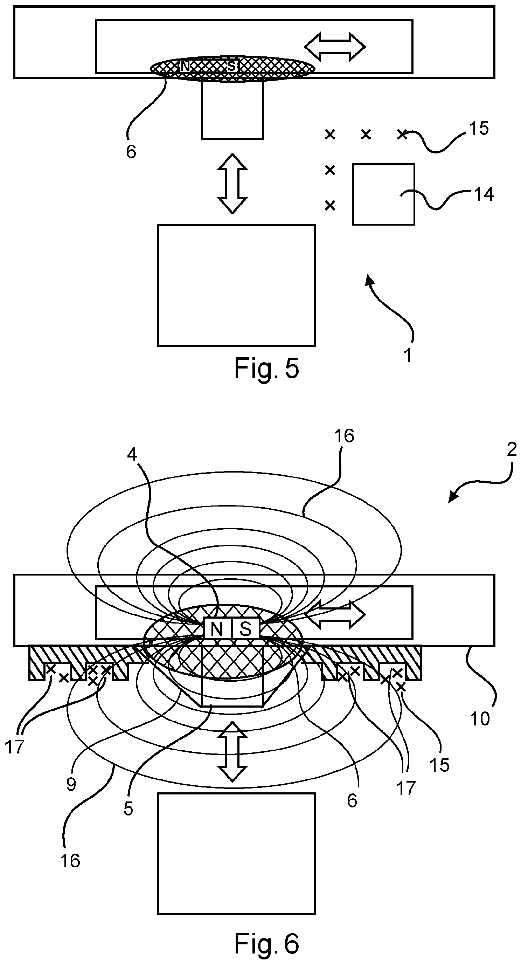

**Fig. 5** zeigt eine schematische Darstellung einer Positionserfassungseinheit 1 gemäß einer fünften erfindungsgemäßen Ausführungsform. Die fünfte Ausführungsform unterscheidet sich von der ersten bis vierten Ausführungsform darin, dass die Schutzeinrichtung den Erfassungsraum 6 nicht direkt schützt, sondern dass die Schutzeinrichtung einen Magneten 14 aufweist, der außerhalb des Erfassungsraums 6 angeordnet ist, und der Magnet 14 ausgebildet ist, die ferritischen Späne 15 anzuziehen, um den Erfassungsraum 6 frei von den ferritischen Spänen 15 zu halten.

Der Magnet 14 der fünften erfindungsgemäßen Ausführungsform kann mit den Schutzeinrichtungen der ersten bis vierten Ausführungsformen kombiniert werden. Ebenso können die Merkmale der ersten und vierten Ausführungsform mit den Merkmalen der zweiten und dritten Ausführungsform kombiniert werden.

**Fig. 6** zeigt eine schematische Darstellung einer Positionserfassungseinheit 1 gemäß einer sechsten Ausführungsform. In dieser Darstellung sind auch magnetische Feldlinien 16 des Magnetfelds des magnetischen Geberelements 4 dargestellt.

In dieser Ausführungsform sind an dem Gehäuse 10 des Kupplungsstellers 2 Sammeltaschen 17 vorgesehen. Die Sammeltaschen 17 sind als Vertiefungen an dem Gehäuse 10 des Kupplungsstellers 2 ausgebildet. Die Vertiefungen sind in separaten Elementen vorgesehen, so dass sie außerhalb des Gehäuses 10 des Kupplungsstellers 2 angeordnet sind, können alternativ aber auch vertieft in dem Gehäuse 10 des Kupplungsstellers 2 vorgesehen sein. Die Sammeltaschen 17 sind in einem Zusammenwirken mit den Abmessungen in Verbindung mit der magnetischen Permeabilität des angrenzenden Materials so angeordnet, dass sich die ferritischen Späne 15 außerhalb der Erfassungsraums 6 des Sensors 5 aber innerhalb eines Wirkungsbereichs der magnetischen Feldlinien 16 anlagern und somit in den Sammeltaschen 17 gesammelt werden. In Fig. 6 ist die Kombination dieser Ausführungsform mit der ersten Ausführungsform dargestellt, sie kann alternativ aber auch mit einer der zweiten bis vierten Ausführungsform kombiniert sein.

### BEZUGSZEICHENLISTE

- 1: Positionserfassungseinheit
- 2: Kupplungssteller
- 3: Stellelement
- 4: magnetisches Geberelement
- 5: Sensor
- 6: Erfassungsraum
- 7: Getriebesteuerung
- 8: Spannungsversorgung und Datenaustausch
- 9: Gehäuse des Sensors
- 10: Gehäuses des Kupplungsstellers
- 11: Befestigungseinrichtung
- 12: Gehäuse der Befestigungseinrichtung
- 13: Rippe
- 14: Magnet
- 15: ferritische Späne
- 16: magnetische Feldlinien
- 17: Sammeltasche
- 20: Fahrzeugkupplung

## Patentansprüche

1. Positionserfassungseinheit (1) zum Erfassen einer Position eines innerhalb eines Gehäuses (10) eines Kupplungsstellers (2) einer Fahrzeugkupplung (20) angeordneten Stellelements (3), aufweisend
ein magnetisches Geberelement (4), das innerhalb des Gehäuses (10) des Kupplungsstellers (2) am Stellelement (3) vorgesehen ist,
einen Sensor (5), der außerhalb des Gehäuses (10) des Kupplungsstellers (2) vorgesehen und so ausgebildet und angeordnet ist, dass er über einen Erfassungsraum (6) verfügt, innerhalb dem der Sensor (5) eine Position des magnetischen Geberelements (4) innerhalb eines vorbestimmten Bewegungsausmaßes des magnetischen Geberelements (4) erfassen kann, und
eine Schutzeinrichtung, die ausgebildet ist, ein Anlagern von durch das magnetische Geberelement (4) angezogenen ferritischen Spänen (15) innerhalb des Erfassungsraums (6) zu verhindern,
**dadurch gekennzeichnet, dass**
die Schutzeinrichtung durch ihre Abmessungen in Verbindung mit einem Material mit einer vorbestimmten magnetischen Permeabilität ausgebildet ist, außerhalb des Erfassungsraums (6) ein Anlagern der ferritischen Späne (15) zu ermöglichen, oder
die Schutzeinrichtung einen Magneten (14) aufweist, der außerhalb des Erfassungsraums (6) angeordnet ist, und der Magnet (14) ausgebildet ist, die ferritischen Späne (15) anzuziehen, um das Anlagern der ferritischen Späne (15) innerhalb des Erfassungsraums (6) zu verhindern, insbesondere indem der Magnet (14) mit einer ausreichend starken Magnetkraft ausgestattet ist.

2. Positionserfassungseinheit (1) gemäß Anspruch 1, wobei
die Schutzeinrichtung ein Gehäuse (9) des Sensors (5) aufweist, das an der Außenseite des Gehäuses (10) des Kupplungsstellers (2) vorgesehen ist und derart ausgebildet ist, dass es aufgrund seiner Abmessungen den außerhalb des Gehäuses (10) des Kupplungsstellers (2) liegenden Teil des Erfassungsraums (6) abdeckt und somit das Anlagern der ferritischen Späne (15) innerhalb des Erfassungsraums (6) verhindert.

3. Positionserfassungseinheit (1) gemäß einem der vorangehenden Ansprüche, wobei
der Sensor (5) mittels einer Befestigungseinrichtung (11) befestigt ist, wobei die Befestigungseinrichtung (11) als Schutzeinrichtung ausgebildet ist.

4. Positionserfassungseinheit (1) gemäß einem der vorangehenden Ansprüche, wobei
die Schutzeinrichtung durch ihre Abmessungen in Verbindung mit einem Material mit einer vorbestimmten magnetischen Permeabilität so ausgebildet ist, dass sie innerhalb des Erfassungsraums (6) ein Anlagern der ferritischen Späne (15) an der Schutzeinrichtung verhindert, aber ein Erfassen der Position des magnetischen Geberelements (4) ermöglicht.

5. Positionserfassungseinheit (1) gemäß einem der vorangehenden Ansprüche, wobei
zumindest eines der Gehäuse (9, 10, 12) eine Rippe (13) aufweist, und die Rippe (13) ausgebildet ist, in einem Bereich der Rippe (13) ein Anlagern der ferritischen Späne (15) zu ermöglichen.

6. Positionserfassungseinheit (1) gemäß einem der vorangehenden Ansprüche, wobei
der Sensor (5) als ein Sensor nach magnetischem Messprinzip ausgebildet ist.

7. Positionserfassungseinheit (1) gemäß Anspruch 6, wobei
der Sensor (5) als ein Hall-Sensor, insbesondere ein 2D-Hall-Sensor oder ein 3D-Hall-Sensor, oder als ein magnetoresistiver Sensor, insbesondere ein Giant-magnetoresistiver Sensor oder ein Tunnel-magnetoresistiver Sensor ausgebildet ist.

8. Kupplungssteller (2) mit einer Positionserfassungseinheit (1) gemäß einem der vorangehenden Ansprüche, wobei
die Schutzeinrichtung nach Anspruch 4 das Gehäuse (10) des Kupplungsstellers (2) aufweist.

9. Kupplungssteller (2) gemäß Anspruch 8, wobei
das Gehäuse (10) des Kupplungsstellers (2) innerhalb eines Bereichs des Erfassungsraums (6) des Sensors (5) eine größere Wandstärke als außerhalb des Bereichs des Erfassungsraums (6) des Sensors (5) aufweist.

10. Kupplungssteller gemäß einem der Ansprüche 8 oder 9, wobei
das Gehäuse (9, 10, 12) des Sensors (5), der Befestigungseinrichtung (11) oder des Kupplungsstellers (2) ausgebildet ist, den Teil des Erfassungsraums (6) außerhalb des Gehäuses des Kupplungsstellers (2) vollständig zu enthalten.

11. Kupplungssteller gemäß einem der Ansprüche 8 oder 9, wobei an dem Gehäuse (10) des Kupplungsstellers (2) Vertiefungen vorgesehen sind, die ausgebildet sind, Sammeltaschen (17) zu bilden, um ein Anlagern der ferritischen Späne (15) darin zu ermöglichen.

12. Fahrzeugkupplung (20) mit einer Positionserfassungseinheit gemäß einem der Ansprüche 1 bis 7 oder einem Kupplungssteller (2) gemäß einem der Ansprüche 8 bis 11.

## Claims

1. A position detection unit (1) for detecting a position of an actuating element (3) arranged inside a housing (10) of a clutch actuator (2) of a vehicle clutch (20), comprising:
a magnetic encoder element (4) that is provided on the actuating element (3), inside the housing (10) of the clutch actuator (2),
a sensor (5) that is provided outside the housing (10) of the clutch actuator (2) and is configured and arranged so as to have a detection space (6) inside which the sensor (5) is able to detect a position of the magnetic encoder element (4) within a predefined range of motion of the magnetic encoder element (4), and
a protective device that is configured to prevent ferritic swarf (15) attracted by the magnetic encoder element (4) from accumulating inside the detection space (6),
**characterised in that,**
due to its dimensions in conjunction with a material having a predefined magnetic permeability, the protective device is configured to allow the ferritic swarf (15) to accumulate outside the detection space (6), or
the protective device has a magnet (14) that is arranged outside the detection space (6), and this magnet (14) is configured to attract the ferritic swarf (15) in order to prevent the ferritic swarf (15) from accumulating inside the detection space (6), in particular by providing the magnet (14) with a sufficiently strong magnetic force.

2. A position detection unit (1) according to claim 1,
the protective device comprising a housing (9) of the sensor (5), this housing (9) being provided on the outside of the housing (10) of the clutch actuator (2) and being configured, due to its dimensions, so as to cover the part of the detection space (6) situated outside the housing (10) of the clutch actuator (2) and thereby to prevent the ferritic swarf (15) from accumulating inside the detection space (6).

3. A position detection unit (1) according to either of the preceding claims,
the sensor (5) being fastened by means of a fastening device (11), this fastening device (11) being configured as a protective device.

4. A position detection unit (1) according to any one of the preceding claims,
due to its dimensions in conjunction with a material with a predefined magnetic permeability, the protective device being configured so as to prevent the ferritic swarf (15) from accumulating inside the protective device but to allow the position of the magnetic encoder element (4) to be detected.

5. A position detection unit (1) according to any one of the preceding claims,
at least one of the housings (9, 10, 12) having a rib (13), and this rib (13) being configured to allow the ferritic swarf (15) to accumulate in a region of the rib (13).

6. The position detection unit (1) according to any one of the preceding claims,
the sensor (5) being configured as a sensor that operates on the magnetic measuring principle.

7. A position detection unit (1) according to claim 6,
the sensor (5) taking the form of a Hall sensor, in particular a 2D Hall sensor or a 3D Hall sensor, or of a magneto-resistive sensor, in particular a giant magneto-resistive sensor or a tunnel magneto-resistive sensor.

8. A clutch actuator (2) having a position detection unit (1) according to any one of the preceding claims,
the protective device according to claim 4 comprising the housing (10) of the clutch actuator (2).

9. A clutch actuator (2) according to claim 8,
the housing (10) of the clutch actuator (2) having a greater wall thickness inside a region of the detection space (6) of the sensor (5) than outside this region of the detection space (6) of the sensor (5).

10. A clutch actuator according to either of claims 8 or 9,
the housing (9, 10, 12) of the sensor (5), of the fastening device (11) or of the clutch actuator (2) being configured to completely contain the part of the detection space (6) outside the housing (10) of the clutch actuator (2).

11. A clutch actuator according to either of claims 8 or 9,
there being provided on the housing (10) of the clutch actuator (2) recesses that are configured to form collection pockets (17) in which the ferritic swarf (15) is allowed to accumulate.

12. A vehicle clutch (20) having a position detection unit (1) according to any one of claims 1 to 7 or having a clutch actuator (2) according to any one of claims 8 to 11.

## Revendications

1. Unité (1) de détection de position pour la détection d'une position d'un élément (3) de réglage disposé à l'intérieur d'une enveloppe (10) d'un actionneur (2) d'embrayage d'un embrayage (20) de véhicule, comportant
un élément (4) magnétique transmetteur, qui est prévu sur l'élément (3) de réglage à l'intérieur de l'enveloppe (10) de l'actionneur (2) d'embrayage,
un capteur (5), qui est prévu à l'extérieur de l'enveloppe (10) de l'actionneur (2) d'embrayage et qui est constitué et monté de manière à disposer d'un espace (6) de détection, à l'intérieur duquel le capteur (5) peut détecter une position de l'élément (4) magnétique transmetteur à l'intérieur d'une étendue de déplacement déterminée à l'avance de l'élément (4) magnétique transmetteur, et
un dispositif de protection, qui est constitué pour empêcher le dépôt à l'intérieur de l'espace (6) de détection de copeaux (15) ferritiques attirés par l'élément (4) magnétique transmetteur,
**caractérisée en ce que**
le dispositif de protection est constitué, par ses dimensions en liaison avec un matériau d'une perméabilité magnétique déterminée à l'avance, pour permettre un dépôt des copeaux (15) ferritiques à l'extérieur de l'espace (6) de détection, ou
le dispositif de protection a un aimant (14), qui est disposé à l'extérieur de l'espace (6) de détection et l'aimant (14) est constitué pour attirer les copeaux (15) ferritiques, afin d'empêcher le dépôt des copeaux (15) ferritiques à l'intérieur de l'espace (6) de détection, en particulier par le fait que l'aimant (14) est pourvu d'une force magnétique suffisamment intense.

2. Unité (1) de détection de position suivant la revendication 1, dans laquelle
le dispositif de protection a une enveloppe (9) du capteur (5), qui est prévue sur la face extérieure de l'enveloppe (10) de l'actionneur (2) d'embrayage et qui est constituée de manière, en raison de ses dimensions, à recouvrir la partie de l'espace (6) de détection se trouvant à l'extérieur de l'enveloppe (10) de l'actionneur (2) d'embrayage et empêcher ainsi le dépôt de copeaux (15) ferritiques à l'intérieur de l'espace (6) de détection.

3. Unité (1) de détection de position suivant l'une des revendications précédentes, dans laquelle
le capteur (5) est fixé au moyen d'un dispositif (11) de fixation, dans laquelle le dispositif (11) de fixation est constitué en dispositif de protection.

4. Unité (1) de détection de position suivant l'une des revendications précédentes, dans laquelle
le dispositif de protection est, par ses dimensions en liaison avec un matériau d'une perméabilité magnétique déterminée à l'avance, constitué de manière à empêcher, à l'intérieur de l'espace (6) de détection, un dépôt des copeaux (15) ferritiques sur le dispositif de protection, mais à rendre possible une détection de la position de l'élément (4) magnétique transmetteur.

5. Unité (1) de détection de position suivant l'une des revendications précédentes, dans laquelle
au moins l'une des enveloppes (9, 10, 12) a une nervure (13) et la nervure (13) est constituée pour rendre possible, dans une partie de la nervure (13), un dépôt des copeaux (15) ferritiques.

6. Unité (1) de détection de position suivant l'une des revendications précédentes, dans laquelle
le capteur (5) est constitué en capteur suivant un principe de mesure magnétique.

7. Unité (1) de détection de position suivant la revendication 6, dans laquelle
le capteur (5) est constitué en capteur de Hall, en particulier en capteur de Hall en 2D ou en capteur de Hall en 3D, ou en capteur magnétorésistif, en particulier en capteur magnétorésistif géant ou en capteur magnétorésistif tunnel.

8. Actionneur (2) d'embrayage ayant une unité (1) de détection de position suivant l'une des revendications précédentes, dans lequel
le dispositif de protection suivant la revendication 4 comporte l'enveloppe (10) de l'actionneur (2) d'embrayage.

9. Actionneur (2) d'embrayage suivant la revendication 8, dans lequel
l'enveloppe (10) de l'actionneur (2) d'embrayage a, à l'intérieur d'une partie de l'espace (6) de détection du capteur (5), une épaisseur de paroi plus grande qu'à l'extérieur de la partie de l'espace (6) de détection du capteur (5).

10. Actionneur d'embrayage suivant l'une des revendications 8 ou 9, dans lequel
l'enveloppe (9, 10, 12) du capteur (5), du dispositif (11) de fixation ou de l'actionneur (2) d'embrayage est constituée pour contenir entièrement la partie de l'espace (6) de détection à l'extérieur de l'enveloppe de l'actionneur (2) de l'embrayage.

11. Actionneur d'embrayage suivant l'une des revendications 8 ou 9, dans lequel il est prévu, sur l'enveloppe (10) de l'actionneur (2) de l'embrayage, des cavités, qui sont constituées pour former des poches (17) collectrices, afin d'y rendre possible un dépôt des copeaux (15) ferritiques.

12. Embrayage (20) de véhicule ayant une unité de position de détection suivant l'une des revendications 1 à 7 ou un actionneur (2) d'embrayage suivant l'une des revendications 8 à 11.
